# EUROPEAN PATENT APPLICATION

(11) **EP 0 748 585 A1**
(43) Date of publication of application: **18.12.1996**
(21) Application number: 96301912.0
(22) Date of filing: 20.03.1996
(51) Int. Cl.: A01G 27/04

(54) **Plant container water-keeping assembly**

(30) Priority: 20.03.1995 GB 9505571
(71) Applicant: Lui, To-Yan, Lamtin Kowloon (HK)
(72) Inventor: Lui, To-Yan, Lamtin Kowloon (HK)
(74) Representative: Luckhurst, Anthony Henry William

(57) **Abstract**

A water-keeping assembly (109) for a plant container (110), which assembly (9) comprises a perforated partition (111) arranged to extend across the bottom of the container (110) for dividing the interior of the container (110) into an upper compartment for holding planting soil and a lower compartment for collecting water drained out of the planting soil through the partition (111). The assembly (109) includes ventilation tubes (112 & 114) arranged to extend upwards from the partition (111) for venting the lower compartment. The assembly (109) further includes water absorbent bars (113) arranged to extend from the lower compartment through the partition (111) into the upper compartment for feeding water collected in the lower compartment upwards into the planting soil in the upper compartment by means of capillary action. The water absorbent bars (113) are provided by respective perforated sleeves (113) to be filled with planting material or soil.

## Description

The present invention relates to a water-keeping assembly for a plant container and to a plant container incorporating such an assembly.

According to a first aspect of the invention, there is provided a water-keeping assembly for use in a plant container, which assembly comprises a perforated partition arranged to extend across the bottom of a said container for dividing the interior of a said container into an upper compartment for holding planting soil and a lower compartment for collecting water drained out of said planting soil through the partition, ventilation means arranged to extend upwards from the partition for venting the lower compartment, and water absorbent means arranged to extend from the lower compartment through the partition into the upper compartment for feeding water collected in the lower compartment upwards into said planting soil in the upper compartment by means of capillary action, characterised in that the water absorbent means is provided by a perforated sleeve to be filled with planting material.

It is preferred that the sleeve is tubular.

Preferably, the planting material in the sleeve is densely packed.

Conveniently, the sleeve is to be filled with planting soil.

In a preferred embodiment, the number or size of perforations at the upper part of the section of the sleeve above the partition is relatively greater or larger than that at the lower part of that section of the sleeve.

In another preferred embodiment, only the upper part but not the lower part of the section of the sleeve above the partition is perforated.

Preferably, the sleeve extends upwards into the upper half of said planting soil in the upper compartment.

It is preferred that the partition has legs for supporting the partition in position inside a said container, said legs being detachable for ease of storage.

Preferably, the partition has a plurality of notches around its periphery in order to form corresponding holes with the inner surface of the wall of a said plant container.

Preferably, the water-keeping assembly includes a floatable marker for indicating the amount of water collected in the lower compartment, said marker extending through the ventilating means and having marking at its upper end for reading against the upper end of the ventilation means.

According to a second aspect of the invention, there is provided a plant container in combination with the aforesaid water-keeping assembly.

In a preferred embodiment, the plant container comprises a body having a closable bottom drain hole.

The invention will now be more particularly described, by way of example only, with reference to the accompanying drawings, in which:
Figure 1 is a partially broken away perspective view of an embodiment of a water-keeping assembly and a plant container incorporating the assembly, in accordance with the invention;

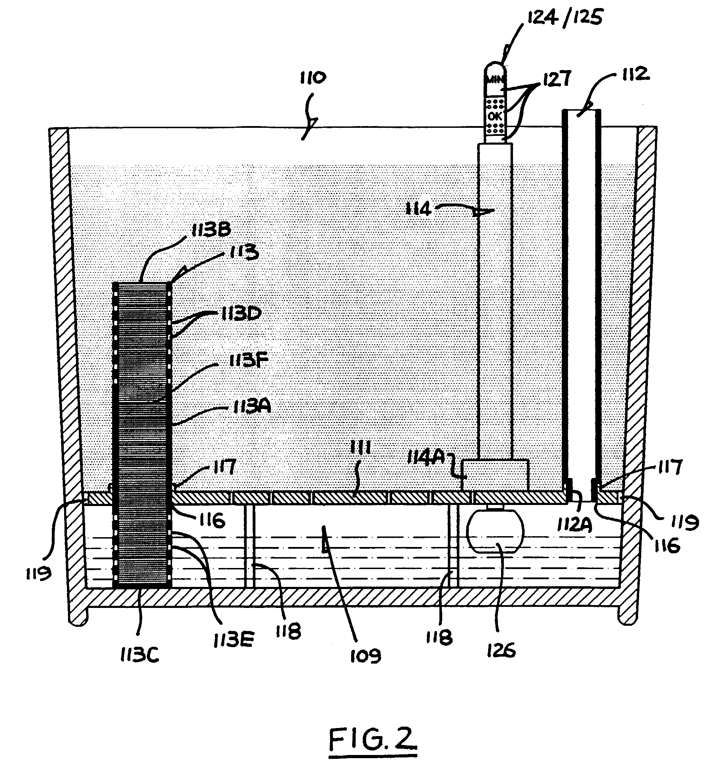

Figure 2 is a cross-sectional side view of the water-keeping assembly and plant container of Figure 1; and
Figure 3 is a perspective view of two water absorbent bars of the water-keeping assembly of Figure 1.

Referring to the drawings, there are shown a water-keeping assembly 109 and a plant container or pot 110 incorporating the assembly 109, embodying the invention. The pot 110 is similar to a conventional pot and is moulded from plastics material. The water-keeping assembly 109 is formed by a horizontal circular partition 111 which is perforated and supports two diametrically opposite ventilation tubes 112, an additional ventilation tube 114 which is slightly different and a pair of diametrically opposite water absorbent bars 113. The tubes 112 and 114 and the bars 113 extend vertically relatively to the partition 111.

The partition 111 has numerous small holes 115 and includes five circular apertures 116 of appropriate sizes around its periphery. The holes 115 permit water but not soil to pass through the partition 111. Each aperture 116 has an integral upstanding peripheral collar 117. The partition 111 is provided with a plurality of legs 118 of equal length, said legs 118 being detachable for ease of storage.

Each ventilation tube 112 is provided by a plain plastic tube which has a reduced bottom end 112A for press-fit into the collar 117 of the associated aperture 116 so as to be supported by the partition 111. The additional ventilation tube 114 is likewise provided by a plain plastic tube which however has an enlarged bottom end 114A for press-fit over the collar 117 of the associated aperture 116 in order to stand on the partition 111. The walls of the tubes 112 and 114 are solid.

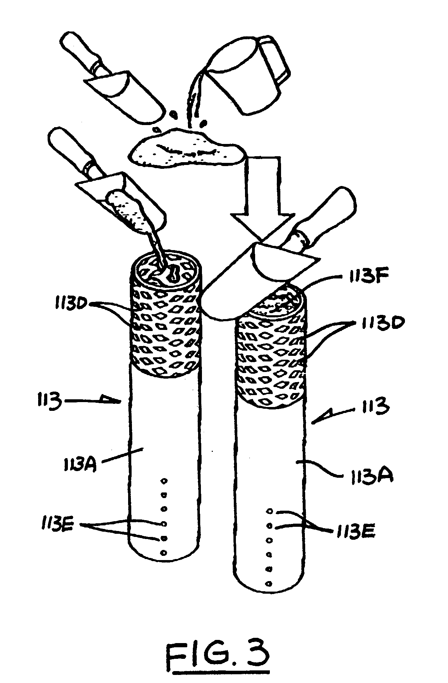

Each absorbent bar 113 is provided by a plastic sleeve or tubular body 113A having an open top end 113B and a closed bottom end 113C. Numerous small perforations 113D are formed over the upper end section (about one-third of the body length) of the body 113A. Two diametrically opposite lines of holes 113E are formed over the lower end section (about one-third of the body length) of the body 113A. The middle section of the body 113A has a solid wall or is not perforated. As illustrated in Figure 3, each absorbent bar 113 is to be prepared for use by a user by filling up the respective tubular body 113A with planting soil, preferably damped, which is then rammed/compressed to become a densely packed soil core 113F capable of absorbing and holding water through capillary action. The absorbent bars 113 are subsequently passed through the corresponding apertures 116 and collars 117 to be located by the partition 111.

In use, the water-keeping assembly 109 is placed inside the pot 110, with the partition 111 extending horizontally across the bottom of the pot 110 and the legs 118 resting on the base wall of the pot 110 to divide the pot interior into an upper compartment for holding planting soil and a lower compartment for collecting water drained out of the planting soil through the partition 111. The partition 111 fits with its periphery against the inner surface of the wall of the pot 110. The ventilation tubes 112 and 114 are sufficiently long to have their open top ends reaching near the top opening of the pot 110. The absorbent bars 113 have a suitable length to extend from the base wall of the pot 110 upwards into the pot's upper compartment, with the lower end sections of their respective bodies 113A having the holes 113E positioned below the partition 111 inside the pot's lower compartment. The solid-walled middle sections of the bodies 113A stand above the partition 111.

In order to set a plant into the pot 110, the upper compartment of the pot 110 is filled up with planting soil to a level below the open top ends of the ventilation tubes 112 and 114 and yet sufficiently deep to completely cover the absorbent bars 113. The upper end sections of the bodies 113A of the bars 113 having the perforations 113D extend into the upper half of the upper compartment or the planting soil, with the soil cores 113F in ultimate contact with the planting soil through the perforations 113D.

With the use of the water-keeping assembly 109, excess water resulting from over-watering is collected in the lower compartment of the pot 110. The lower end sections of the absorbent bars 113 having the holes 113E are immersed in the collected water. Such water is gradually fed back up to the planting soil above the partition 111 by means of capillary action through the soil cores 113F of the bars 113, thereby maintaining the planting soil suitably moist.

The ventilation tubes 112 and 114 provide vent passages to enable ventilation of the pot's lower compartment in order to avoid the growth of any bacteria in the water collected at the bottom of the pot 110, which will otherwise rot the root of the plant.

The water-keeping assembly 109 further includes a floating marker 124 in the form of a stick 125 which is held passing through the ventilation tube 114. The bottom end of the stick 125 is fitted with a plastic bulb 126 for keeping the overall marker 124 afloat on the water collected in the pot's lower compartment. The enlarged bottom end 114A of the tube 114 allows some room for the buoyant bulb 126. The upper end of the stick 125 is provided with a series of three short sections 127 marked, from above, "MIN", "OK" and "MAX", respectively, to indicate the level/amount of the collected water, which are to be read against the uppermost end of the tube 114.

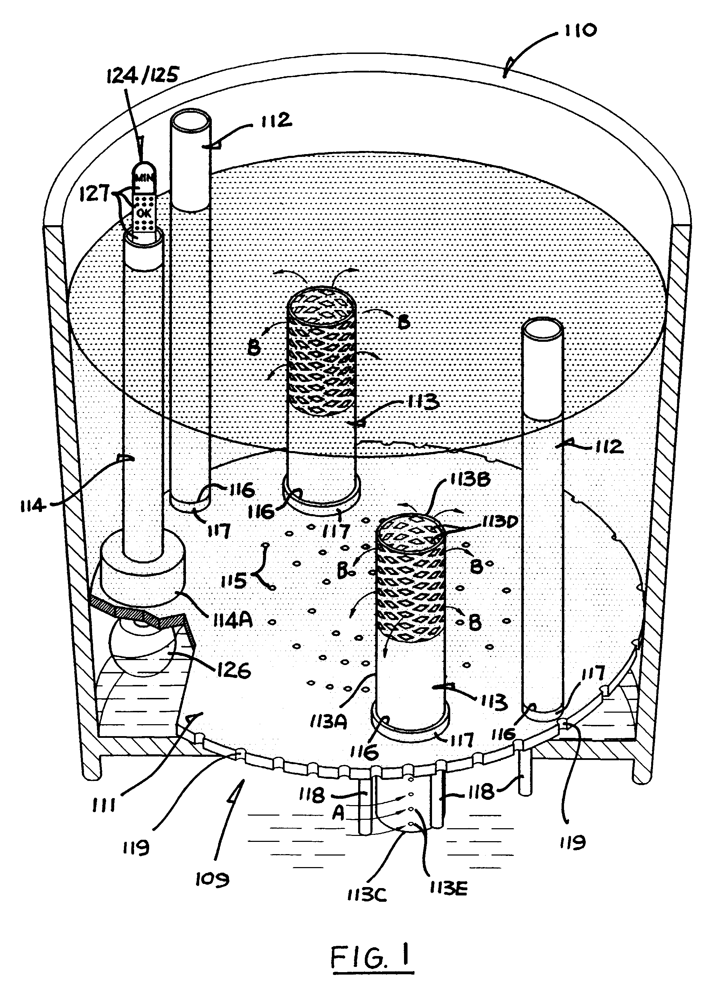

Water collected in the lower compartment is absorbed into the soil cores 113F through the bottom holes 113E (as indicated by arrows A of Figure 1) and then delivered up through the soil cores 113F by means of capillary action and finally disperses out through the perforations 113D into the upper half of the planting soil (as indicated by arrows B in Figure 1). Accordingly, the planting soil inside the pot 110 is maintained in a suitably moist condition by the water collected in the lower compartment through operation of the absorbent bars 113.

The middle sections of the bodies 113A of the absorbent bars 113 are not perforated so as to stop water coming out of the soil cores 113F too soon or at a level which is too low, otherwise the water may never or not easily reach the upper half or top part of the planting soil which is the part most readily to lose moisture. The water reaching the top part of the planting soil will by itself disperse downwards, whereby the planting soil will be kept suitably moist from top to bottom.

In this regard, it is envisaged that the middle section of the body 113A of each absorbent bar 113 may also have perforations, but the number or size of the perforations 113D at the upper end section of the body 113A should be relatively greater or larger than that at the middle section in order to supply more water to the upper layer of the planting soil than to the lower layer.

The top ends of the absorbent bars 113 should preferably reach into the top layer, say about 50mm thick, of the planting soil inside the pot 110 in order to provide the best moisturising effect.

The use of planting soil to form the absorbent bars 113 is convenient because planting soil is readily available from the planting exercise and is therefore not needed to be supplied specially. Also, planting soil is naturally resistant to rotting by contact with water. Alternatively, the bodies 113A of the absorbent bars 113 may be filled with any other suitable planting material that is readily available, such as planting/potting mix, earth and dirt, etc.

The partition 111 has, around its periphery, small notches 119 to form holes immediately with the inner surface of the wall of the pot 110. Such holes are useful for plant root to reach down into the water collected in the lower compartment. Bearing in mind that plant root has a tendency to grow to find its way along a solid surface, such holes/notches 119 can readily be reached by the plant root as they are formed right on the corner between the partition 111 and the wall of the pot 110.

The pot 110 may optionally have a bottom drain hole on one side, which is provided with a rubber stopper or cap for closing, for if necessary draining excessive water out of the lower compartment.

The invention has been given by way of example only, and various other modifications of and/or alterations to the described embodiment may be made by persons skilled in the art without departing from the scope of the invention as specified in the appended claims.

## Claims

1. A water-keeping assembly for use in a plant container, which assembly comprises a perforated partition arranged to extend across the bottom of a said container for dividing the interior of a said container into an upper compartment for holding planting soil and a lower compartment for collecting water drained out of said planting soil through the partition, ventilation means arranged to extend upwards from the partition for venting the lower compartment, and water absorbent means arranged to extend from the lower compartment through the partition into the upper compartment for feeding water collected in the lower compartment upwards into said planting soil in the upper compartment by means of capillary action, characterised in that the water absorbent means is provided by a perforated sleeve to be filled with planting material.

2. A water-keeping assembly as claimed in claim 1, characterised in that the sleeve is tubular.

3. A water-keeping assembly as claimed in claim 1, characterised in that the planting material in the sleeve is densely packed.

4. A water-keeping assembly as claimed in claim 1, characterised in that the sleeve is to be filled with planting soil.

5. A water-keeping assembly as claimed in claim 1, characterised in that the number or size of perforations at the upper part of the section of the sleeve above the partition is relatively greater or larger than that at the lower part of that section of the sleeve.

6. A water-keeping assembly as claimed in claim 1, characterised in that only the upper part but not the lower part of the section of the sleeve above the partition is perforated.

7. A water-keeping assembly as claimed in claim 1, characterised in that the sleeve extends upwards into the upper half of said planting soil in the upper compartment.

8. A water-keeping assembly as claimed in claim 1, characterised in that the partition has legs for supporting the partition in position inside a said container, said legs being detachable for ease of storage.

9. A water-keeping assembly as claimed in claim 1, characterised in that the partition has a plurality of notches around its periphery in order to form corresponding holes with the inner surface of the wall of a said plant container.

10. A water-keeping assembly as claimed in claim 1, including a floatable marker for indicating the amount of water collected in the lower compartment, said marker extending through the ventilating means and having marking at its upper end for reading against the upper end of the ventilation means.

11. A plant container in combination with a water-keeping assembly as claimed in claim 1.

12. A plant container as claimed in claim 11, comprising a body having a closable bottom drain hole.
